# EUROPÄISCHE PATENTSCHRIFT

(11) **EP 0 827 522 B1**
(45) Veröffentlichungstag und Bekanntmachung des Hinweises auf die Patenterteilung: **31.07.2002**
(21) Anmeldenummer: 96916059.7
(22) Anmeldetag: 13.05.1996
(51) Int. Cl.: C08J 9/10, B60R 13/00

(54) **HEISSHÄRTENDE GESCHÄUMTE KAUTSCHUKMASSEN MIT HOHER STRUKTURFESTIGKEIT**
HEAT-SETTING RUBBER FOAMS WITH HIGH STRUCTURAL STRENGTH
CAOUTCHOUC EXPANSE DURCISSABLE A CHAUD ET A RESISTANCE STRUCTURALE ELEVEE

(30) Priorität: 20.05.1995 DE 19518673
(43) Veröffentlichungstag der Anmeldung: 11.03.1998
(73) Patentinhaber: Henkel Teroson GmbH, 69123 Heidelberg (DE)
(72) Erfinder: BORN, Peter, D-69207 Sandhausen (DE); DITTRICH, Frank, D-74889 Sinsheim (DE); HIRTHAMMER, Michael, D-69115 Heidelberg (DE)
(74) Vertreter: Hase, Christian, Dr.
(86) Internationale Anmeldenummer: EP9602048
(87) Internationale Veröffentlichungsnummer: WO9636660

(56) Entgegenhaltungen:
- GB-A- 836 201
- US-A- 3 606 326
- US-A- 4 657 938
- US-A- 4 680 316
- DATABASE WPI Section Ch, Week 8327 Derwent Publications Ltd., London, GB; Class A93, AN 83-702585 XP002011276 & JP,A,58 089 350 (MITSUBISHI MOTOR CORP) , 27.Mai 1983

## Beschreibung

Die vorliegende Erfindung betrifft heißhärtende, schäumbare reaktive Zusammensetzungen auf der Basis von natürlichen und/oder synthetischen Kautschuken, Vulkanisations- und Treibmitteln, deren Herstellung, deren Verwendung zum Ausschäumen von Hohlräumen im Fahrzeug- oder Maschinenbau sowie ein Verfahren zum Versteifen derartiger Hohlraumstrukturen und gleichzeitigem Dämpfen von akustischen Schwingungen.

Bei der Fabrikation von Kraftfahrzeugen, Schleppfahrzeugen sowie im Maschinenbau werden beim Fügen der Fahrzeug- bzw. Maschinenteile Hohlräume gebildet. Insbesondere bei selbsttragenden Karosserien gibt es zahlreiche dieser Hohlraumstrukturen zur Erzielung der notwendigen Steifigkeit bzw. Festigkeit der Karosserie, beispielhaft genannt seien hier die sogenannten A-, B-, C-Säulen, Schweller und Dachrahmen von Personenkraftfahrzeugen und Nutzfahrzeugen. Beim normalen Betrieb derartiger Fahrzeuge werden störender Schall und störende Geräusche durch diese Hohlräume weitergeleitet bzw. entstehen in ihnen durch schwingende Luftsäulen. Um diese störenden Geräusche zu dämpfen, werden die Hohlräume zumindest teilweise mit Dichtstoffen gefüllt. Diese Füllmassen dämpfen oder absorbieren störende Schallschwingungen und Geräusche, außerdem verhindern sie den Eintritt von Feuchtigkeit und Fremdstoffen.

Für das Abdichten dieser Hohlräume zum Zwecke der Versiegelung gegen Eintritt von Feuchtigkeit und Fremdstoffen sowie der Verminderung von Geräuschen (Luftschall) gibt es bereits zahlreiche Lösungsvorschläge. Diese lassen sich grob in vier Gruppen einteilen:
- vorgeformte expandierende Materialien: die EP-A-453777 schlägt beispielsweise einen mechanischen, im Hohlraum zu fixierenden Pfropfen aus thermisch expandierendem Dichtungsmaterial vor, Angaben über dessen Zusammensetzung werden nicht gemacht.

Die EP-A-383498 beschreibt vorgeformte, schäumbare Teile, bestehend aus Copolymeren des Ethylens mit Ethylacrylat, die Treibmittel enthalten. Dabei werden die Abdichtkörper durch Extrusion vorgeforat und müssen mit mechanischen Befestigungsmitteln im abzudichtenden Hohlraum vor dem Aufschäumen fixiert werden.

In ähnlicher Weise können gemäß EP-A-611778 vorgeformte, in der Hitze expandierbare Dichtungen auf der Basis von Metallsalzen von carboxylierten Ethylencopolymeren (Ionomeren), Treibmitteln und Klebrigmachern hergestellt werden.
- Vorgeformte und geschnittene weichelastische Schäume auf Basis von Kautschuken oder Polyurethanen: Beispiele hierzu sind in der DE-C-3326030, der DE-C-3516194 oder der JP-A-89166939 zu finden.
- Schäumbare reaktive Flüssigpolymere, wie z.B. Polyurethansysteme: Gemäß JP-A-86116509 wird ein Zweikomponentenpolyurethansystem mit Hilfe einer Misch- und Dosiereinrichtung direkt vor Ort in die entsprechenden Hohlräume gespritzt, wo sie unter Aufschäumen aushärten. Gemäß JP-A-93192937 können die Hohlräume an den abzudichtenden Stellen beutelähnliche Behältnisse enthalten, in die eine schäumende Flüssigkeit injiziert wird, die anschließend durch Aufschäumen diesen Beutel ausfüllt und damit einen Abschnitt des Hohlraumes abdichtet. Die JP-A-92269080 beschreibt eine heißschmelzende Zusammensetzung auf der Basis von thermoplastischen Kautschuken, Klebrigmachern und Wachsen oder Ölen, die physikalisch aufgeschäumt werden und danach in die auszufüllenden Hohlräume gegossen werden, wo sie durch Abkühlen erstarren.
- Gemäß JP-A-93059345 werden pastöse thermisch expandierende Füll-Massen auf der Basis von flüssigen Kautschuken, Festkautschuken, Vulkanisationsmitteln, Weichmachern und Treibmitteln in die abzudichtenden Hohlräume gegeben, wo sie beim Erwärmen aufschäumen und vulkaniseren. Diese geschäumten Vulkanisate haben eine sehr geringe Härte, die Härte nach Shore A ist in der Regel < 5, die Zugscherfestigkeit dieser Schäume ist meistens deutlich unter 0,1 MPa.

Allen bisher bekannten Abdichtmaterialien für Hohlräume, auch "Pillar Filler" genannt, ist gemeinsam, daß sie die Abdichtfunktion und die Funktion der Geräuschdämpfung (Dämpfung von Luftschall) einigermaßen befriedigend lösen. Im Fahrzeugbau, insbesondere beim Bau von Personenkraftfahrzeugen, ist man bemüht, zur Erhöhung der Sicherheit der Passagiere die Fahrgastzellen steifer zu gestalten, ohne hierbei eine signifikante Gewichtszunahme der Fahrzeugkarosserie in Kauf nehmen zu müssen. Es ist also wünschenswert, wenn die Hohlraumstrukturen der Fahrzeuge zur erhöhten Steifigkeit beitragen können.

Es wurde jetzt gefunden, daß heißhärtende, schäumbare reaktive Zusammensetzungen auf der Basis von natürlichen und/oder synthetischen, olefinische Doppelbindungen enthaltenden Kautschuken, Vulkanisations- und Treibmitteln eine Dreifachfunktion erfüllen können. Sie können:
- Abdichtfunktion
- akustische Dämpfung (Dämpfung des Luftschalls und des Körperschalls)
- strukturelle Versteifung
von Hohlkörpern, insbesondere im Fahrzeugbau bewirken, sofern sie so zusammengesetzt sind, daß sie bei der Aushärtung eine Volumenausdehnung von mindestens 100% haben und dieser ausgehärtete Schaum eine Härte Shore A von mindestens 30 aufweist. Vorzugsweise sollte die Volumenausdehnung bei der Aushärtung jedoch mindestens 200%, ganz besonders bevorzugt mindestens 300% betragen, und der ausgehärtete Schaum sollte bevorzugt eine Härte Shore A von mindestens 50, ganz besonders bevorzugt von mindestens 70 aufweisen.

Die erfindungsgemäßen schäumbaren reaktiven Zusammensetzungen bestehen aus
- einem oder mehreren Flüssigkautschuken und/oder Festkautschuken oder Elastomeren
- Vulkanisationsmitteln und Vulkanisationsbeschleunigern und/oder Katalysatoren
- Füllstoffen
- ggf. Klebrigmachern und /oder Haftvermittlern
- Treibmitteln
- ggf. Extenderölen
- ggf. Alterungsschutzmitteln
- ggf. Rheologiehilfsmitteln.

Die Flüssigkautschuke oder Elastomere enthalten dabei pro Molekül mindestens eine olefinisch ungesättigte Doppelbindung. Sie können dabei aus der folgenden Gruppe der Homound/oder Copolymeren ausgewählt werden:

Polybutadiene, insbesondere die 1,4- und und 1,2-Polybutadiene, Polybutene, Polyisobutylene, 1,4- und 3,4-Polyisoprene, Styrol-Butadien-Copolymere, Butadien-Acrylnitril-Copolymere, wobei eines oder mehrere dieser Polymeren endständige und/oder (statistisch verteilte) seitenständige funktionelle Gruppen haben können. Beispiele für derartige funktionelle Gruppen sind Hydroxy-, Amino-, Carboxyl-, Carbonsäureanhydrid- oder Epoxygruppen. Das Molekulargewicht dieser Flüssigkautschuke ist typischerweise unterhalb von 20000, vorzugsweise zwischen 900 und 10000. Der Anteil an Flüssigkautschuk an der Gesamtzusammensetzung hängt dabei von der gewünschten Rheologie der ungehärteten Zusammensetzung und der erwünschten mechanischen Steifigkeit des Verbundes Hohlraum/Schaum und den akustischen Dämpfungseigenschaften der ausgehärteten Zusammensetzung ab. Der Anteil an flüssigem Kautschuk bzw. Elastomer variiert normalerweise zwischen 5 und 50 Gew.% der Gesamtformulierung. Dabei hat es sich als zweckmäßig erwiesen, vorzugsweise Mischungen von Flüssigkautschuken unterschiedlicher Molekulargewichte und unterschiedlicher Konfiguration in bezug auf die restlichen Doppelbindungen einzusetzen. Zur Erzielung optimaler Haftung auf den diversen Substraten wird in den besonders bevorzugten Formulierungen anteilig eine Flüssigkautschukkomponente mit Hydroxylgruppen bzw. Säureanhydridgruppen eingesetzt. Mindestens einer der Flüssigkautschuke sollte einen hohen Anteil an cis-1,4-Doppelbindungen, ein weiterer einen hohen Anteil an Vinyldoppelbindungen enthalten.

Geeignete Festkautschuke haben im Vergleich zu den Flüssigkautschuken ein signifikant höheres Molekulargewicht (MW = 100000 oder höher), Beispiele für geeignete Festkautschuke sind Polybutadien, vorzugsweise mit einem sehr hohen Anteil an cis-1,4-Doppelbindungen (typischerweise über 95%), Styrolbutadienkautschuk, Butadien-Acryl-Nitril-Kautschuk, synthetischer oder natürlicher Isoprenkautschuk, Butylkautschuk oder Polyurethankautschuk.

Gegebenenfalls können die erfindungsgemäßen Zusammensetzungen noch fein verteilte thermoplastische Polymerpulver enthalten. Beispiele für geeignete thermoplastische Polymere sind Polypropylen, Polyethylen, thermoplastische Polyurethane, Methacrylatcopolymere, Styrolcopolymere, Polyvinylchlorid, Polyvinylacetal sowie insbesondere Polyvinylacetat und dessen Copolymere wie beispielsweise Ethylenvinylacetatcopolymere. Obwohl die Teilchengröße bzw. Teilchengrößenverteilung der Polymerpulver nicht besonders kritisch zu sein scheint, sollte die mittlere Teilchengröße unter 1mm, vorzugsweise unter 350µm liegen. Die Menge des ggf. zugesetzten thermoplastischen Polymerpulvers liegt zwischen 2 und 20 Gew.%, bevorzugt zwischen 2 und 10 Gew.%.

Die Vernetzungs- bzw. Härtungsreaktion der Kautschukzusammensetzung und das Aufschäumen haben einen entscheidenden Einfluß auf die Abdichtfunktion, auf die akustische Dämpfung sowie auf die versteifende Wirkung des Hohlkörpers, daher muß das Vulkanisationssystem und die Treibmittelzusammensetzung besonders sorgfältig ausgewählt und abgestimmt werden. Für das Vulkanisationssystem werden erfindungsgemäß verwendet: Vulkanisationssysteme auf der Basis von Thiuramdisulfiden, organischen Peroxiden, polyfunktionellen Aminen, Chinonen, p-Benzochinondioxim, p-Nitrosobenzol und Dinitrosobenzol oder (blockierten) Diisocyanaten, oder (bevorzugt) Vulkanisationssysteme auf der Basis von elementarem Schwefel und organischen Vulkanisationsbeschleunigern sowie Zinkverbindungen. Der pulverförmige Schwefel wird dabei in Mengen von 4 bis 15 Gew.%, bezogen auf die Gesamtzusammensetzung eingesetzt, besonders bevorzugt werden Mengen zwischen 6 und 8% eingesetzt. Als organische Beschleuniger eignen sich Dithiocarbamate (in Form ihrer Ammonium- bzw. Metallsalze), Xanthogenate, Thiuram-Verbindungen (Monosulfide und Disulfide), Thiazolverbindungen, Aldehyd/Aminbeschleuniger (z.B. Hexamethylentetramin) sowie Guanidinbeschleuniger, ganz besonders bevorzugt wird Dibenzothiazyldisulfid (MBTS) oder Diphenylguanidin. Diese organischen Beschleuniger werden in Mengen zwischen 2 und 10 Gew.% bezogen auf die Gesamtformulierung, bevorzugt zwischen 3 und 8 Gew.%, eingesetzt. Bei den als Beschleuniger wirkenden Zinkverbindungen kann zwischen den Zinksalzen von Fettsäuren, Zinkdithiocarbamaten, basischen Zinkcarbonaten sowie insbesondere feinteiligem Zinkoxid gewählt werden. Der Gehalt an Zinkverbindungen liegt im Bereich zwischen 1 und 10 Gew.%, vorzugsweise zwischen 3 und 7 Gew.%. Zusätzlich können weitere typische Kautschukvulkanisationshilfsmittel wie Fettsäuren (z.B. Stearinsäure) in der Formulierung vorhanden sein.

Zum Erzielen der Aufschäumung während des Härtungsvorganges können organische Treibmittel aus der Klasse der Azoverbindungen, N-Nitrosoverbindungen, Sulfonylhydrazide oder Sulfonylsemicarbazide verwendet werden. Für die erfindungsgemäß zu verwendenden Azoverbindungen seien beispielhaft das Azobisisobutyronitril und insbesondere das Azodicarbonamid genannt, aus der Klasse der Nitrosoverbindungen sei beispielhaft das Di-Nitrosopentamethylentetramin genannt, aus der Klasse der Sulfohydrazide das 4,4'-Oxybis(benzolsulfonsäurehydrazid), das Diphenylsulfon-3,3'-disulfohydrazid oder das Benzol-1,3-disulfohydrazid und aus der Klasse der Semicarbazide das p-Toluolsulfonylsemicarbazid genannt.

Obwohl die erfindungsgemäßen Zusammensetzungen aufgrund des bevorzugten Gehaltes an Flüssigkautschuk mit funktionellen Gruppen in der Regel bereits eine sehr gute Haftung auf den Substraten haben, die ausgeschäumt werden sollen, können, falls erforderlich, Klebrigmacher und/oder Haftvermittler zugesetzt werden. Hierzu eignen sich beispielsweise Kohlenwasserstoffharze, Phenolharze, Terpen-Phenolharze, Resorcinharze oder deren Derivate, modifizierte oder unmodifizierte Harzsäuren bzw. -ester (Abietinsäurederivate), Polyamine, Polyaminoamide, Anhydride und Anhydrid-enthaltende Copolymere. Auch der Zusatz von Polyepoxyharzen in geringen Mengen kann bei manchen Substraten die Haftung verbessern. Hierfür werden dann jedoch vorzugsweise die festen Epoxidharze mit einem Molekulargewicht von über 700 in fein gemahlener Form eingesetzt. Falls Klebrigmacher bzw. Haftvermittler eingesetzt werden, hängt deren Art und Menge von der Polymerzusammensetzung des Pillar Fillers sowie dem Substrat, auf welches die Zusammensetzung appliziert wird, ab. Typische klebrigmachende Harze (Tackifier) wie z.B. Terpenphenolharze oder Harzsäurederivate werden in Konzentrationen zwischen 5 und 20 Gew.% verwendet, typische Haftvermittler wie Polyamine, Polyaminoamide oder Phenolharze oder Resorcinderivate werden im Bereich zwischen 0,1 und 10 Gew.% verwendet.

Vorzugsweise sind die erfindungsgemäßen Zusammensetzungen frei von Weichmachern und Extenderölen. Es kann jedoch notwendig sein, die Rheologie der ungehärteten Zusammensetzung und/oder die mechanischen Eigenschaften der gehärteten Zusammensetzung durch Zugabe von sog. Extenderölen, d.h. aliphatischen, aromatischen oder naphtenischen Ölen zu beeinflussen. Vorzugsweise geschieht diese Beeinflussung zwar durch zweckmäßige Auswahl der niedrigmolekularen Flüssigkautschuke oder durch die Mitverwendung von niedermolekularen Polybutenen oder Polyisobutylenen. Falls Extenderöle eingesetzt werden, werden Mengen im Bereich zwischen 2 und 15 Gew.% verwendet.

Die Füllstoffe können aus einer Vielzahl von Materialien ausgewählt werden, insbesondere sind hier zu nennen Kreiden, natürliche oder gemahlene Calciumcarbonate, Calcium-Magnesiumcarbonate, Silikate, Schwerspat sowie Ruß. Es kann ggf. zweckmäßig sein, daß zumindest ein Teil der Füllstoffe oberflächenvorbehandelt ist, insbesondere hat sich bei den verschiedenen Calciumcarbonaten bzw. Kreiden eine Beschichtung mit Stearinsäure zur Verminderung der eingetragenen Feuchtigkeit und zur Verminderung der Feuchtigkeitsempfindlichkeit der ausgehärteten Zusammensetzung als zweckmäßig erwiesen. Ggf. können die erfindungsgemäßen Zusammensetzungen noch zwischen 1 und 5 Gew.% an Calciumoxid enthalten. Der Gesamtanteil an Füllstoffen in der Formulierung kann zwischen 10 und 70 Gew.% variieren, der Vorzugsbereich liegt zwischen 25 und 60 Gew.%.

Gegen den thermischen, thermooxidativen oder Ozon - Abbau der erfindungsgemäßen Zusammensetzungen können konventionelle Stabilisatoren oder Alterungsschutzmittel, wie z.B. sterisch gehinderte Phenole oder Aminderivate eingesetzt werden, typische Mengenbereiche für diese Stabilisatoren sind 0,1 bis 5 Gew.%.

Obwohl die Rheologie der erfindungsgemäßen Zusammensetzungen normalerweise durch die Auswahl der Füllstoffe und das Mengenverhältnis der niedermolekularen Flüssigkautschuke in den gewünschten Bereich gebracht werden kann, können konventionelle Rheologiehilfsmittel wie z.B. pyrogene Kieselsäuren, Bentone oder fibrilierte oder Pulp-Kurzfasern im Bereich zwischen 0,1 und 7% zugesetzt werden. Außerdem können weitere konventionelle Hilfs- und Zusatzmittel in den erfindungsgemäßen Zusammensetzungen Verwendung finden.

Ein bevorzugtes Anwendungsfeld für die erfindungsgemäßen heißhärtenden, schäumbaren reaktiven Zusammensetzungen ist der sogenannte Rohbau in der Automobilindustrie, hier sind die Teile, die später die Hohlräume der Karosserie bilden, gut zugänglich, so daß die Applikation mit herkömmlichen Pump- und Dosiereinrichtungen für pastöse Materialien vorgenommen werden kann. Für die Härtungs- und Aufschäumreaktion der Zusammensetzungen stehen dann die Prozeßtemperaturen der verschiedenen Lacköfen zur Verfügung, d.h. ein Temperaturbereich zwischen 80°C und 240°C für etwa 10 bis 35 Minuten, vorzugsweise dient der Durchlauf der Karosserie bzw. der Teile durch den sogenannte "EC-Ofen" zum Aufschäumen und Aushärten der erfindungsgemäßen Zusammensetzungen, d.h. Temperaturen zwischen 160 und 200°C.

Die erfindungsgemäßen Zusammensetzungen können frei von niedermolekularen Epoxidharzen formuliert werden und sind daher kostengünstig und toxikologisch unbedenklich. Die stark expandierende Schaumstruktur ist nicht oder nur geringfügig komprimierbar und hat akustische Wirksamkeit, d.h. das Maximum des Verlustfaktors liegt bei Raumtemperatur (etwa 20°C) und ist größer als 0,1. Der Verlustfaktor wird dabei nach der Oberst-Methode bei 200 Hz gemessen, wie sie in der DIN 53440, Teil 3, beschrieben ist. Dadurch ist eine Kombination von 3 technischen Funktionen mit einem Produkt gewährleistet:
- Abdichtfunktion gegen eindringende Feuchtigkeit und Fremdkörper
- akustische Dämpfungswirkung (Luft- und Körperschall)
- strukturelle Versteifungswirkung der Hohlkörper.

Die erfindungsgemäßen Zusammensetzungen können auch erfolgreich an Stellen eingesetzt werden, die keine Hohlkörper im Sinne der eingangs vorgenommenen Beschreibungen darstellen, wie z.B. die Innenseiten von Kraftfahrzeugtüren. Bisher wurden an diesen Stellen sog. Bitumenmatten zur akustischen Dämpfung aufgeklebt. Da im modernen Fahrzeugbau die Türen durch viele Einbauten wie motorisch getriebene Fensterheber, Seitenaufprallschutzverstärkungen oder Lautsprechereinbauten so schwer zugänglich werden, daß herkömmliche Bitumenmatten nur noch unter großen Schwierigkeiten eingeklebt werden können, lassen sich die erfindungsgemäßen Zusammensetzungen auch hier erfolgreich anwenden.

In den nachfolgenden Ausführungsbeispielen soll die Erfindung näher erläutert werden, wobei die Auswahl der Beispiele keine Beschränkung des Umfanges des Erfindungsgegenstandes darstellen soll.

In einem evakuierbaren Laborkneter wurden die in der nachfolgenden Tabelle aufgeführten Zusammensetzungen unter Vakuum so lange gemischt, bis sie homogen waren. Falls nicht anders angegeben, sind alle Teile in den Beispielen Gewichtsteile. Die Zusammensetzung des Vergleichsbeispiels wurde in Anlehnung an die Angaben der JP-A-93059345 (Derwent Abstract 93-121614) hergestellt.

**Tabelle 1**

| | Beispiel 1 | Vergleichsbeispiel |
|---|---|---|
| Polybutadien, fest 1) | 5,0 | 10,0 |
| Polybutadien, flüssig 2) | 5,0 | - |
| Polybutadien, flüssig 3) | 15,0 | 27,2 |
| Polybutadien, flüssig 4) | 5,0 | 4,0 |
| Polyvinylacetat, | | |
| Pulver 5) | 5,0 | - |
| Phenolharz, gemahlen | - | 3,0 |
| Zinkoxid, aktiv | 4,0 | 2,2 |
| Schwefel, Pulver | 7,0 | 2,1 |
| Diphenylguanidin | 5,0 | - |
| Dibenzothiazyldisulfid | - | 1,9 |
| Antioxidans | 0,5 | 0,5 |
| Diphenoxi-di-sulfohydrazid | 1,0 | 0,7 |
| Phthalsäureanhydrid | - | 0,5 |
| Ruß, Pulver | 0,5 | 0,5 |
| Kreide | 47,0 | 47,6 |
| | | |
| Volumenausdehnung 6) | 304% | 210% |
| Härte Shore A 6) | 77 | 4 |
| Zugscherfestigkeit 6)7) | 0,49MPa | 0,08MPa |

| | | |
|---|---|---|
| 1) cis-1,4 mind. 98%, Mooney-Viskosität 48 (ML4-100) | | |
| 2) MW ca. 1800, cis-1,4 ca. 72% | | |
| 3) MW ca. 1800, vinyl ca. 40-50% | | |
| 4) MW ca. 2800, Polybutadien mit endständigen OH-Gruppen | | |
| 5) EVA-Copolymerisat, Tg ca. 23°C | | |
| 6) Aushärtung: 30 min in 180°C | | |
| 7) Prüfkörper Karosseriestahl St1405, 0,8mm dick, beölt mit ASTM-Nr.1 Überlappung: 25mm x 25mm Klebstoffschichtdicke: 3mm Prüfgeschwindigkeit: 50mm/min | | |

Wie aus der Tabelle 1 ersichtlich, weist die erfindungsgemäße Zusammensetzung nach Aushärtung unter gleichzeitiger Aufschäumung eine um 1 1/2 Größenordnungen höhere Shore A Härte auf, gleichzeitig ist die Zugscherfestigkeit und die Volumenausdehnung signifikant größer als bei der Zusammensetzung des Vergleichsbeispiels. Der Schaum auf Basis der erfindungsgemäßen Zusammensetzungen weist eine geschlossenporige Struktur auf und hat eine vollständig geschlossene äußere Haut, so daß eine Shore Härte-Bestimmung zweifelsfrei möglich ist.

### Versteifungswirkung:

Zur Prüfung der versteifenden Wirkung der geschäumten Zusammensetzungen wurde ein Hohlprofil mit rechteckigem Querschnitt des Hohlraumes aus Karosseriestahl ST1404, 0,8 mm Stärke, hergestellt. Dazu wurden zwei Z-förmige Blechprofile von 70mm Länge und jeweils 50mm Schenkelbreite mit Hilfe von 4 Schweißpunkten so zusammengefügt, daß ein quaderförmiger Hohlraum von 25 x 50 x 70mm gebildet wurde. In diesen Hohlraum wurden 45g der heißhärtenden, schäumbaren Zusammensetzungen eingefüllt, anschließend wurden diese Zusammensetzungen 30min auf 180°C erhitzt, wobei sie unter Aufschäumen aushärteten. Nach Erkalten und vor der Prüfung des Druckwiderstandes wurde der nach außen vorgequollene Überschuß an geschäumtem Material kantenbündig abgeschnitten. In einem Druckversuch auf einer Zwick-Prüfmaschine wurde der so vorbereitete Prüfkörper so eingespannt, daß der Druck auf die Schmalseite des Quaders (25x70mm-Fläche) ausgeübt wurde. Unter Aufnahme eines Kraft-Weg-Diagrammes wurde die Maximalkraft Fₘₐₓ bis zum ersten Deformationsvorgang des Profils ermittelt und daraus der Kraftzuwachs bestimmt, der bis zur Deformation des gefüllten Profils im Vergleich zum leeren Stahl-Profil notwendig war. Zusätzlich wurde die Fläche unter der Kraft-Weg-Kurve ermittelt und daraus der relative Flächenzuwachs des gefüllten Profils im Vergleich zum Leer-Profil bestimmt. Dieser Flächenzuwachs ist ein Maß für die zusätzliche Energie, die ein derartig versteifter Hohlkörper als Deformationsenergie aufnehmen kann.

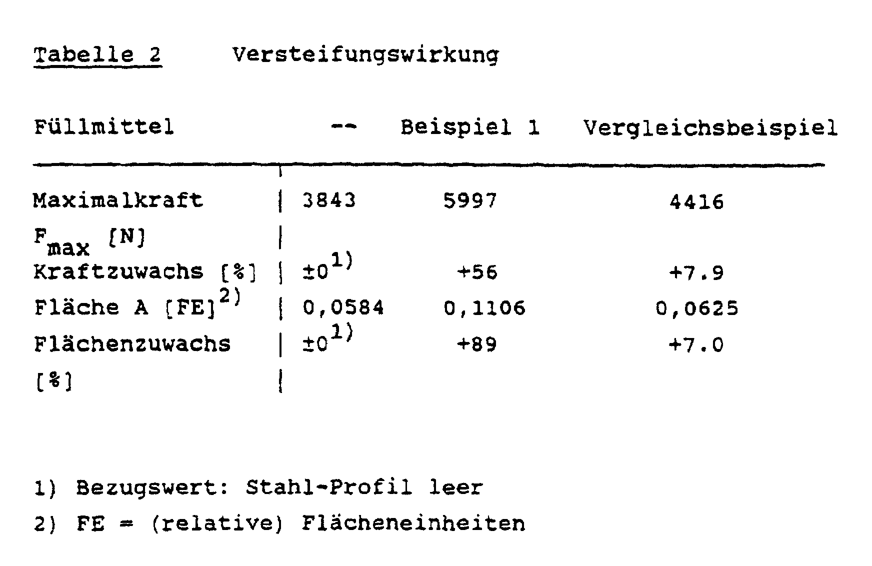

Wie aus Tabelle 2 ersichtlich, wird mit schäumbarem Kautschukmaterial gemäß Stand der Technik nur ein etwa 8facher Kraftzuwachs im Vergleich zum leeren Stahlprofil erzielt, während bei der erfindungsgemäßen Zusammensetzung ein 56facher Kraftzuwachs erzielt wird. Noch deutlicher wird der Vorteil der erfindungsgemäßen Zusammensetzungen bei dem Flächenzuwachs, der ein Maß für die aufzunehmende Deformationsenergie darstellt: hier ist die Versteifungswirkung mehr als 10fach höher als bei einem Füllmaterial gemäß Stand der Technik.

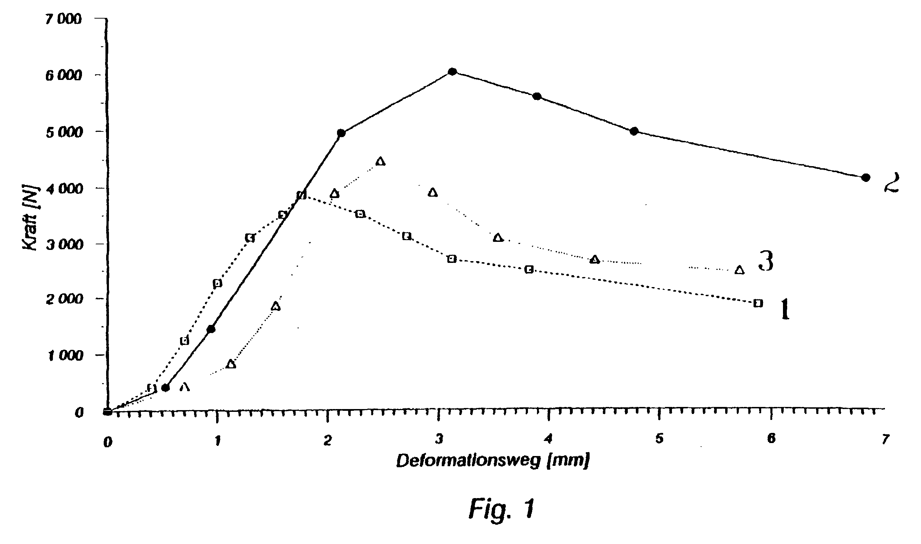

In der **Figur 1** ist die Maximalkraft des Druckversuches über den Deformationsweg dargestellt. Die Kurve 1 stellt den Kraftverlauf des leeren Stahlprofils dar, die Kurve 2 den Kraft-Weg-Verlauf des mit der erfindungsgemäßen Zusammensetzung ausgeschäumten Stahlprofils, die Kurve 3 den Kraft-Weg-Verlauf eines Profils dar, das mit einer geschäumten Kautschukzusammensetzung gemäß Stand der Technik ausgefüllt wurde.

## Patentansprüche

1. Heißhärtende, schäumbare, reaktive Zusammensetzung bestehend aus
- einem oder mehreren Flüssigkautschuk(en) und/oder Festkautschuk(en) oder Elastomer(en)
- Vulkanisationsmitteln und Vulkanisationsbeschleunigern und/oder Katalysatoren
- Füllstoffen
- ggf. Klebrigmachern und/oder Haftvermittlern
- Treibmitteln
- ggf. Extenderölen
- ggf. Alterungsschutzmitteln
- ggf. Rheologiehilfsmitteln
**dadurch gekennzeichnet, daß** als Vulkanisationsmittel Thiuramdisulfide, organische Peroxide, polyfunktionelle Amine, Chinone, p-Benzochinondioxim, p-Nitrosobenzol, Dinitrosobenzol oder (blockierte) Diisocyanate oder elementarer Schwefel und organische Vulkanisationsbeschleuniger sowie Zinkverbindungen und als Treibmittel organische Treibmittel aus der Klasse der Azoverbindungen, N-Nitrosoverbindungen, Sulfonylhydrazide oder Sulfonylsemicarbazide verwendet werden, so daß bei der Aushärtung eine Volumenausdehnung von mindestens 100% erfolgt und der ausgehärtete Schaum eine Härte Shore-A von mindestens 30 aufweist.

2. Zusammensetzung nach Anspruch 1, **dadurch gekennzeichnet, daß** mindestens ein Kautschuk ein flüssiges Polyen aus der Gruppe bestehend aus 1,2-Polybutadien, 1,4-Polybutadien, Polyisopren, Polybuten, Polyisobutylen, Copolymere des Butadiens und/oder Isoprens mit Styrol und/oder Acrylnitril, Copolymere von Acrylsäureestern mit Dienen ist, wobei das Molekulargewicht des flüssigen Polyens im Bereich von 900 bis etwa 40000 liegt.

3. Zusammensetzung nach Anspruch 2, **dadurch gekennzeichnet, daß** das oder die flüssige(n) Polyen(e) zusätzlich terminale und/oder statistisch verteilte Carboxylgruppen, Carbonsäureanhydridgruppen, Hydroxylgruppen, Aminogruppen, Mercaptogruppen oder Epoxygruppen als funktionelle Gruppen enthält.

4. Heißhärtende Zusammensetzung nach mindestens einem der vorhergehenden Ansprüche, **dadurch gekennzeichnet, daß** sie zusätzlich mindestens einen Festkautschuk in einer Menge von 1.5 bis 9 Gew.%, vorzugsweise 4 bis 6 Gew.%, bezogen auf die Gesamtzusammensetzung, enthält.

5. Zusammensetzung nach mindestens einem der vorhergehenden Ansprüche, **dadurch gekennzeichnet, daß** sie einen oder mehrere Festkautschuke aus der Gruppe cis-1,4-Polybutadien, Styrol-Butadien-Kautschuk, synthetischer Isoprenkautschuk, Naturkautschuk, Ethyien-Propylen-Dien-Kautschuk (EPDM), Nitrilkautschuk, Butylkautschuk, Acrylkautschuk enthält.

6. Heißhärtende Zusammensetzung gemäß Anspruch 3, **dadurch gekennzeichnet, daß** das Vulkanisationssystem aus 4 Gew.% bis 15 Gew.%, vorzugsweise 5 Gew.% bis 10 Gew.% pulverförmigem Schwefel, 2 Gew.% bis 8 Gew.%, vorzugsweise 3 Gew.% bis 6 Gew.% organischem Beschleuniger und 1 Gew.% bis 8 Gew.%, vorzugsweise 2 Gew.% bis 6 Gew.% Zinkverbindungen, vorzugsweise Zinkoxid besteht, wobei die Gew.% auf die Gesamtzusammensetzung bezogen sind.

7. Heißhärtende Zusammensetzung nach mindestens einem der vorhergehenden Ansprüche, **dadurch gekennzeichnet, daß** als Azoverbindung, Azobisisobutyronitril oder Azodicarbonamid, als Nitrosoverbindung, Di-Nitrosopentamethylentetramin, als Sulfohydrazid, 4,4'-Oxybis(benzolsulfonsäurehydrazid), und als Semicarbazid, p-Toluolsulfonylsemicarbazid verwendet wird.

8. Herstellung der heißhärtenden, reaktiven Zusammensetzung nach mindestens einem der vorhergehenden Ansprüche durch Mischen der Komponenten unter hoher Scherung.

9. Verwendung der heißhärtenden reaktiven Zusammensetzung nach mindestens einem der Ansprüche 1 bis 7 zum Ausschäumen von Hohlräumen im Fahrzeug oder Maschinenbau.

10. Verfahren zum mechanischen Versteifen und Dämpfen von Schwingungen, **dadurch gekennzeichnet, daß** Zusammensetzungen nach mindestens einem der Ansprüche 1 bis 7 in Hohlräume von Fahrzeug- oder Maschinenteilen eingebracht werden und dort durch Erwärmen aufgeschäumt und ausgehärtet werden.

## Claims

1. A hot-curing foamable reactive composition consisting of
- one or more lquid rubber(s) and solid rubber(s) or elastomer(s),
- vulcanizing agents and vulcanization accelerators and/or catalysts,
- fillers,
- optionally tackifiers and/or coupling agents,
- blowing agents,
- optionally extender oils,
- optionally antiagers,
- optionally rheology aids,
**characterized in that** thiuram disulfides, organic peroxides, polyfunctional amines, quinones, p-benzoquinone dioxime, p-nitrosobenzene, dinitrosobenzene or (blocked) diisocyanates or elemental sulfur and organic vulcanization accelerators and zinc compounds are used as vulcanizing agents and organic blowing agents from the class of azo compounds, N-nitroso compounds, sulfonyl hydrazides or sulfonyl semicarbazides are used as blowing agents so that the foam undergoes a volume expansion of at least 100% during curing and the cured foam has a Shore A hardness of at least 30.

2. A composition as claimed in claim 1, **characterized in that** at least one rubber is a liquid polyene from the group consisting of 1,2-polybutadiene, 1,4-polybutadiene, polyisoprene, polybutene, polyisobutylene, copolymers of butadiene and/or isoprene with styrene and/or acrylonitrile, copolymers of acrylates with dienes, the molecular weight of the liquid polyene being in the range from 900 to around 40,000.

3. A composition as claimed in claim 2, **characterized in that** the liquid polyene(s) additionally contain(s) terminal and/or statistically distributed carboxyl groups, carboxylic anhydride groups, hydroxyl groups, amino groups, mercapto groups or epoxy groups as functional groups.

4. A hot-curing composition as claimed in at least one of the preceding claims, **characterized in that** it additionally contains at least one solid rubber in a quantity of 1.5 to 9% by weight and preferably in a quantity of 4 to 6% by weight, based on the composition as a whole.

5. A composition as claimed in at least one of the preceding claims, **characterized in that** it contains one or more solid rubbers from the group consisting of cis-1,4-polybutadiene, styrene/butadiene rubber, synthetic isoprene rubber, natural rubber, ethylene/propylene/diene rubber (EPDM), nitrile rubber, butyl rubber, acrylate rubber.

6. A hot-curing composition as claimed in claim 3, **characterized in that** the vulcanization system consists of 4% by weight to 15% by weight and preferably 5% by weight to 10% by weight of powder-form sulfur, 2% by weight to 8% by weight and preferably 3% by weight to 6% by weight of organic accelerator and 1% by weight to 8% by weight and preferably 2% by weight to 6% by weight of zinc compounds, preferably zinc oxide, the percentages by weight being based on the composition as a whole.

7. A hot-curing composition as claimed in at least one of the preceding claims, **characterized in that** azo-bis-isobutyronitrlle or azo-dicarbonamide is used as the azo compound, dinitrosopentamethylene tetramine is used as the nitroso compound, 4,4'-hydroxy-bis-(benzenesulfonic acid hydrazide) is used as the sulfohydrazide and p-toluene sulfonyl semicarbazide is used as the semicarbazide.

8. The production of the hot-curing reactive composition claimed in at least one of the preceding claims by high-shear mixing of the components.

9. The use of the hot-curing reactive composition claimed in at least one of claims 1 to 7 for filling cavities in vehicle or machine construction with foam.

10. A mechanical stiffening and vibration damping process, **characterized in that** the compositions claimed in at least one of claims 1 to 7 are introduced into cavities in vehicle or machine parts and are foamed and cured therein by heating.

## Revendications

1. Composition réactive expansible, durcissable à chaud constituée de
- un ou plusieurs caoutchoucs liquides et/ou caoutchouc(s) solide(s) ou élastomère(s)
- agents de vulcanisation et accélérateurs de vulcanisation et/ou catalyseurs
- matières de charge
- le cas échéant, d'agents donnant du collant et/ou d'agents adhésifs
- agents gonflants
- le cas échéant, d'huiles de dilution
- le cas échéant, de produits de protection contre le vieillissement
- le cas échéant, d'additifs rhéologiques
**caractérisée en ce qu'**on utilise comme moyens de vulcanisation des disulfures de thiuram, des peroxydes organiques, des amines polyfonctionnelles, des quinones, du p-benzoquinone dioxime, du p-nitrosobenzène, du dinitrosobenzène ou des diisocyanates (bloqués) ou du soufre élémentaire et des accélérateurs de vulcanisation organiques ainsi que des composés du zinc et comme agents gonflants des agents gonflants organiques de la classe des composés azoïques, des composés N-nitrosés, des hydrazides sulfoniques ou des semi-carbazides sulfoniques, de sorte que, lors du durcissement, il se produit une dilatation volumique d'au moins 100% et que la mousse durcie présente une dureté Shore A d'au moins 30.

2. Composition suivant la revendication 1, **caractérisée en ce qu'**au moins un caoutchouc est un polyène liquide du groupe composé du 1,2-polybutadiène, du 1,4-polybutadiène, du polyisoprène, du polybutène, du polyisobutylène, des copolymères du butadiène et/ou de l'isoprène avec le styrène et/ou l'acrylonitrile, des copolymères des esters d'acrylate avec des diènes, le poids moléculaire du polyène liquide étant dans la plage de 900 à environ 40000.

3. Composition suivant la revendication 2, **caractérisée en ce que** le ou les polyènes liquides contiennent en plus comme groupes fonctionnels terminaux et/ou répartis statistiquement des groupes carboxyle, des groupes d'anhydride carboxylique, des groupes hydroxyle, des groupes amino, des groupes mercapto ou des groupes époxy.

4. Composition durcissable à chaud suivant l'une au moins des revendications précédentes, **caractérisée en ce qu'**elle contient en plus au moins un caoutchouc solide en quantité de 1,5 à 9 % en poids, de préférence de 4 à 6 % en poids, rapportée à la composition totale.

5. Composition suivant au moins une des revendications précédentes, **caractérisée en ce qu'**elle contient un ou plusieurs des caoutchoucs solides du groupe des caoutchoucs cis-1,4-polybutadiène, styrène-butadiène, caoutchouc isoprène synthétique, caoutchouc naturel, caoutchouc éthylène-propylène-diène (EPDM), caoutchouc nitrile, caoutchouc butyle, caoutchouc acryle.

6. Composition durcissable à chaud selon la revendication 3, **caractérisée en ce que** le système de vulcanisation est constitué de 4 % en poids à 15 % en poids, de préférence de 5 % en poids à 10 % en poids de soufre pulvérulent, de 2 % en poids à 8 % en poids, de préférence de 3 % en poids à 6 % en poids d'accélérateur organique, de 1 % en poids à 8 % en poids, de préférence de 2 % en poids à 6 % de composés du zinc, de préférence de l'oxyde de zinc, les % en poids se rapportant à la composition totale.

7. Composition suivant au moins une des revendications précédentes, **caractérisée en ce qu'**on utilise comme composé azoique l'azobis(isobutyronitrile) ou l'azodicarbonamide, comme composé nitrosé la dinitrosopentaméthylènetétramine, comme hydrazide sulfonique la 4,4'-oxybis(hydrazide d'acide benzène-sulfonique) et comme semicarbazide la p-toluolsulfonyl-semicarbazide.

8. Fabrication de la composition réactive durcissable à chaud suivant l'une au moins des revendications précédentes par mélange des composants sous fort cisaillement.

9. Utilisation de la composition réactive durcissable à chaud suivant l'une au moins des revendications 1 à 7 pour remplir de mousse des espaces creux en construction automobile ou en construction mécanique.

10. Procédé de raidissement mécanique et d'amortissement de vibrations, **caractérisé en ce que** des compositions suivant au moins l'une des revendications 1 à 7 sont introduites dans des espaces creux véhicules ou de pièces de machines et y sont moussées et durcies par échauffement.
